# EUROPEAN PATENT APPLICATION

(11) **EP 4 037 041 A1**
(43) Date of publication of application: **03.08.2022**
(21) Application number: 22151623.0
(22) Date of filing: 14.01.2022
(51) Int. Cl.: H01M 8/023, H01M 8/0258, H01M 8/04082, H01M 8/04746, H01M 8/04791, H01M 8/1011

(54) **DIRECT METHANOL FUEL CELL AND METHOD OF OPERATION**

(30) Priority: 29.01.2021 US 202117161839
(71) Applicant: Hamilton Sundstrand Corporation, Charlotte, NC 28217-4578 (US)
(72) Inventor: Yang, Zhiwei, South Windsor, 06074 (US); Darling, Robert Mason, South Windor, 06074 (US)
(74) Representative: Dehns

(57) **Abstract**

A direct methanol fuel cell includes a cathode electrode, an anode electrode and a membrane located between the anode electrode and the cathode electrode. An anode hydrophilic microporous plate (HMP) is located at an anode side of the fuel cell. The anode HMP has a front side and a back side opposite the front side, and the front side is positioned closer to the anode electrode than the back side. An anode gas diffusion layer is located in an anode chamber defined between the anode electrode and the anode HMP. A flow of methanol fuel is introduced into the back side of the anode hydrophilic microporous plate or to the anode chamber.

## Description

### BACKGROUND

Exemplary embodiments pertain to the art of fuel cells, and in particular to direct methanol fuel cells.

The increased use of electrical power in, for example, aircraft systems and other portable and mobile environments, requires advanced electrical storage systems and/or a chemical to electrical power conversion system to generate adequate amounts of electrical power. Both high system efficiency and high power density of the conversion system are required.

Fuel cell-based power systems, such as direct methanol fuel cell (DMFC)-based power systems, are promising power sources for such applications due to the high energy density and the ease of transport and storage of methanol, and relatively simple system structure, with a reaction of methanol and oxygen outputting water and carbon dioxide, and producing electrical energy. Typical DMFC systems, however, can only operate with diluted methanol fuel, typically 1.6 to 9.6 percent by weight of methanol, diluted with water. Such systems usually have a pure methanol reservoir, and mix the pure methanol with product water to get a diluted fuel flow. This adds complexity and high flows plus a mixing reservoir which is extra mass and volume. Further, utilizing highly diluted methanol fuel decreases power and energy density of the system. Using higher methanol concentrations typical leads to lower cell performance due to higher methanol crossover.

An alternative approach is a vapor feed DMFC, in which a higher methanol concentration solution is evaporated before feeding into the cell. In such systems, however, the cells must always be maintained at a high temperature, above the fuel's boiling point, to prevent fuel condensation. This approach increases system complexity and energy usage, and results in difficulties in system operation, especially at a cold start condition. Additionally, water management is always a challenge for typical DMFC systems having solid plates, leading to lower cell performance, especially when operating with a high methanol concentration solution via a vapor feed.

### BRIEF DESCRIPTION

In one embodiment, a direct methanol fuel cell (e.g. a direct methanol fuel cell for use in the method as herein disclosed) includes a cathode electrode, an anode electrode and a membrane located or disposed between the anode electrode and the cathode electrode. An anode hydrophilic microporous plate (HMP) is located or disposed at an anode side of the fuel cell. The anode HMP has a front side and a back side opposite the front side, and the front side is positioned, located or disposed closer to the anode electrode than the back side. An anode gas diffusion layer is located or disposed in an anode chamber defined between the anode electrode and the anode HMP. A flow of methanol fuel is introduced (e.g. selectably introduced) into the back side of the anode hydrophilic microporous plate or to the anode chamber, or the fuel cell comprises a means for introducing (e.g. selectably introducing) a flow of methanol fuel into the back side of the anode hydrophilic microporous plate or to the anode chamber. Means for introducing a flow of methanol fuel may be or comprise one or more valves configured to direct, e.g. selectably direct, a liquid flow of methanol fuel to the back side of the anode HMP or to the anode chamber.

In some embodiments, the flow of methanol fuel has a concentration of between 1% and 100% by weight of methanol.

In some embodiments, the flow of methanol fuel is introduced into the fuel cell in a liquid phase.

In some embodiments, a blower is located or disposed at the anode side to internally circulate gases in the anode chamber.

In some embodiments, one or more valves are configured to selectably direct the liquid flow of methanol fuel to the back side of the anode HMP or to the anode chamber.

In some embodiments, the flow of methanol fuel is selectably introduced to a back side of the anode HMP or to the anode chamber based on a concentration of methanol in the flow of methanol fuel.

In some embodiments, a cathode hydrophilic microporous plate (HMP) is located or disposed at a cathode side of the fuel cell. The cathode HMP has a front side and a back side opposite the front side. The front side is located or disposed closer to the cathode electrode than the back side. A cathode gas diffusion layer is located or disposed between the cathode electrode and the cathode HMP. A liquid flow of deionized water or a water-based solution is introduced into the back side of the cathode HMP.

In some embodiments, the anode electrode, the cathode electrode and the membrane are constructed as a membrane electrode assembly.

In some embodiments, the anode gas diffusion layer is one of hydrophilic or hydrophobic.

In some embodiments, the cathode gas diffusion layer is one of hydrophilic or hydrophobic, and a hydrophilic gas diffusion layer is preferred.

In another embodiment, a method of operating a direct methanol fuel cell (e.g. a direct fuel cell as herein disclosed) includes providing a fuel cell, including a cathode electrode, an anode electrode, and a membrane located or disposed between the anode electrode and the cathode electrode. An anode hydrophilic microporous plate (HMP) is located or disposed at an anode side of the fuel cell. The anode HMP has a front side and a back side opposite the front side. The front side is located or disposed closer to the anode electrode than the back side. An anode gas diffusion layer is located or disposed in an anode chamber defined between the anode electrode and the anode HMP, and a flow of methanol fuel is introduced (e.g. selectably introduced) into the back side of the anode HMP or to the anode chamber.

In some embodiments, the flow of methanol fuel is selectably introduced to the back side of the anode HMP or to the anode chamber based on a concentration of methanol in the flow of methanol fuel.

In some embodiments, the flow of methanol fuel has a concentration of between 1% and 100% by weight of methanol.

In some embodiments, the flow of methanol fuel is introduced to the fuel cell at the anode chamber when a concentration of methanol in the flow of methanol fuel is less than or equal to 15% by weight of methanol.

In some embodiments, the flow of methanol fuel is introduced to the fuel cell at the back side of the anode HMP when a concentration of methanol in the flow of methanol fuel is greater than 15% (e.g. greater than 15% and up to 100%) by weight of methanol.

In some embodiments, the flow of methanol fuel is introduced into the fuel cell in a liquid phase.

In some embodiments, the flow of methanol fuel introduced into the back side of anode HMP is maintained under a negative pressure against the gases pressure in the anode chamber.

In some embodiments, the operating pressure of the flow of methanol fuel in the back side of anode HMP is about 0.5 lbf/in² to 10 lbf/in² less than the gases pressure in the anode chamber.

In some embodiments, the gases in the anode chamber are internally circulated via a blower to enhance evaporation and diffusion of the methanol vapor from the anode HMP to anode electrode.

In some embodiments, the flow of methanol fuel is selectably directed to the back side of the anode HMP or to the anode chamber via operation of one or more valves.

In some embodiments, the method includes providing a cathode hydrophilic microporous plate (HMP) located or disposed at a cathode side of the fuel cell. The cathode HMP has a front side and a back side opposite the front side. The front side is located or disposed closer to the cathode electrode than the back side. A cathode gas diffusion layer is located or disposed between the cathode electrode and the cathode hydrophilic microporous plate. A liquid flow of deionized water or a water-based solution is circulated at the back side of the cathode HMP under a negative pressure against the gases pressure in the cathode chamber, and an oxidant is introduced into the cathode chamber.

### BRIEF DESCRIPTION OF THE DRAWINGS

The following descriptions should not be considered limiting in any way. With reference to the accompanying drawings, like elements are numbered alike:
FIG. 1 is a schematic illustration of an embodiment of a direct methanol fuel cell (DMFC);
FIG. 2 is a schematic illustration of an embodiment of an anode side of a DMFC;
FIG. 3 is a schematic illustration of another embodiment of a DMFC; and
FIG. 4 is a schematic illustration of yet another embodiment of a DMFC.

### DETAILED DESCRIPTION

A detailed description of one or more embodiments of the disclosed apparatus and method are presented herein by way of exemplification and not limitation with reference to the Figures.

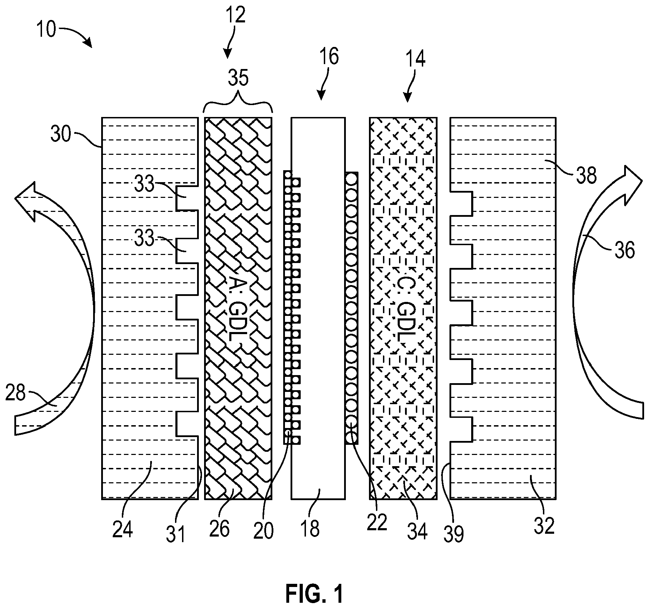

Referring to FIG. 1, shown is a schematic illustration of an embodiment of a fuel cell (10). In some embodiments, the fuel cell 10 is a direct methanol fuel cell (DMFC), utilizing methanol as a fuel. The fuel cell 10 generally has an anode side 12 and a cathode side 14 with a membrane electrode assembly (MEA) 16 disposed between. The anode side 12 and the cathode side 14 are electrically insulated from each other by the MEA 16. The MEA 16 is proton permeable from the anode side 12 to the cathode side 14. The MEA 16 includes a membrane layer 18, such as a proton exchange membrane (PEM), sandwiched between an anode electrode 20 and a cathode electrode 22. In some embodiments, the cathode electrode 22 and/or the anode electrode 20 have catalyst materials or carbon supported catalyst materials embedded therein. A flow of fuel 28 is introduced to the fuel cell 10 at the anode side 12, and a flow of oxidant (i.e. oxygen or air) is introduced to the cathode side 14. Electrochemical reactions of the fuel 28 and oxidant occurs on the MEA 16 and produces electricity.

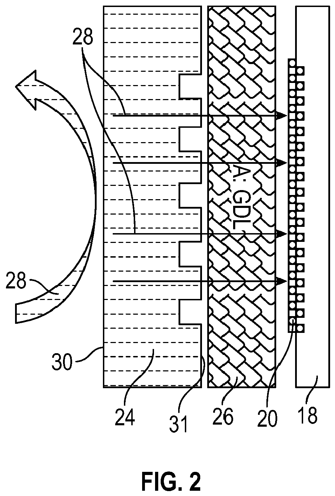

The anode side 12 includes a hydrophilic microporous plate (HMP) 24 working as anode bipolar plate, which may or may not have flow channels superimposed on one side or both sides of the anode HMP 24. In some embodiments, the anode side 12 also includes an anode gas diffusion layer (GDL) 26. The anode GDL 26 is located or disposed closer to the MEA 16 than is the anode HMP 24. As shown in FIG. 2, the anode HMP 24 is liquid permeable, such that a liquid phase flow of fuel 28 introduced at a back side 30 of the anode HMP 24 wicks through the anode HMP 24 to a front side 31 of the anode HMP 24, where vapor phase methanol from the front side 31 of the anode HMP 24 diffuses through the anode GDL 26 to the anode electrode 20. The front side 31 of the anode HMP 24 and the anode electrode 20 define an anode chamber 35 there between. In some embodiments, the front side 31 of the anode HMP 24 may include one or more anode HMP channels 33. The liquid phase flow of fuel 28 at the back side 30 of the anode HMP 24 is typically maintained under a small negative pressure against the gases pressure in the anode GDL 26. The anode GDL 26 is hydrophilic or hydrophobic or mixed, with or without a microporous layer.

Referring again to FIG. 1, the cathode side 14 includes a cathode HMP 32 and a cathode GDL 34. The cathode HMP 32 works as a cathode bipolar plate that may or may not have flow channels superimposed on one side or both sides of the cathode HMP 32. The cathode GDL 34 is located or disposed closer to the MEA 16 than is the cathode HMP 32, and is either hydrophilic or hydrophobic or mixed, with or without a microporous layer, wherein a hydrophilic cathode GDL 34 is preferred. The cathode HMP 32 has a flow of deionized water 36 circulating in a back side 38 of the cathode HMP 32, typically under a small negative pressure against the gases pressure in the cathode GDL 34, such that the cathode HMP 32 can well humidify the MEA 16 by the water vapor from a front side 39 of the cathode HMP 32, and at the same time, remove any liquid water produced by the fuel cell 10, therefore preventing the MEA 16 and/or the cathode GDL 34 from becoming flooded.

The fuel cell 10 structure described herein is effectively usable with a methanol flow of fuel 28 in a wide range of concentrations from, for example, 1 percent by weight methanol to 100 percent by weight methanol. Shown in FIG. 1 is a schematic of fuel cell 10 operation, where the flow of fuel 28 has a methanol concentration in a middle to high range of about 50% to 100% by weight methanol. In such fuel cells 10, the flow of fuel 28 is circulated in the back side 30 of the anode HMP 24 under a small negative pressure against the gases pressure in the anode GDL 26, and the methanol vapor from the surface of the front side 31 of anode HMP 24 diffuses through the anode GDL 26 to the anode electrode 20 of the MEA 16. In some embodiments, the operating pressure of the liquid flow of fuel 28 in the back side 30 of anode HMP 24 is about 0.5 lbf/in² to 10 lbf/in² less than the gases pressure in the anode chamber 35.

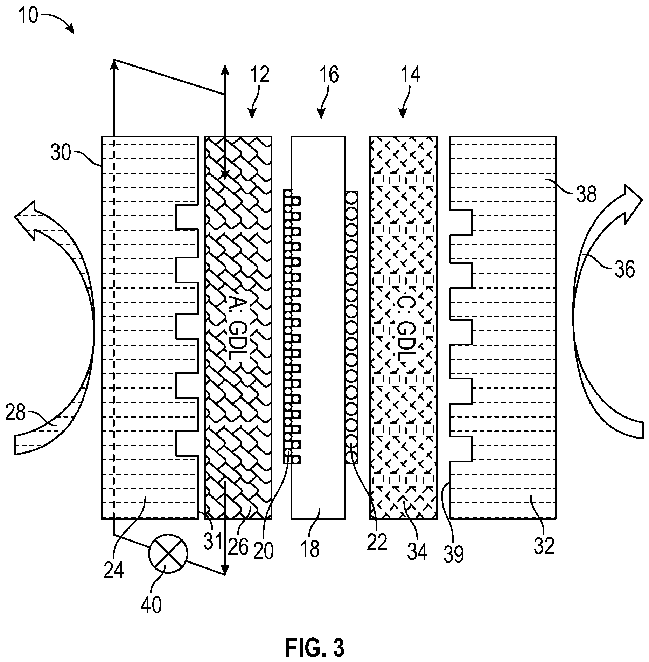

Referring now to FIG. 3, in some embodiments the methanol flow of fuel 28 has a methanol concentration in a middle to low range of about 15% to 50% by weight methanol. In such fuel cells 10, the flow of fuel 28 is circulated in the back side 30 of the anode HMP 24 under a small negative pressure against the gases pressure in the anode GDL 26, and the methanol vapor from the surface of the front side 31 of anode HMP 24 diffuses through the anode GDL 26 to the anode electrode 20 of the MEA 16. Further, a blower 40 is provided to the anode side 12 to internally circulate gases such as product carbon dioxide and methanol vapor in the anode chamber 35, to enhance the evaporation rate of the methanol from the front side 31 of anode HMP 24 and the methanol vapor diffusion rate through the anode GDL 26 to reach the anode electrode 20 of the MEA 16.

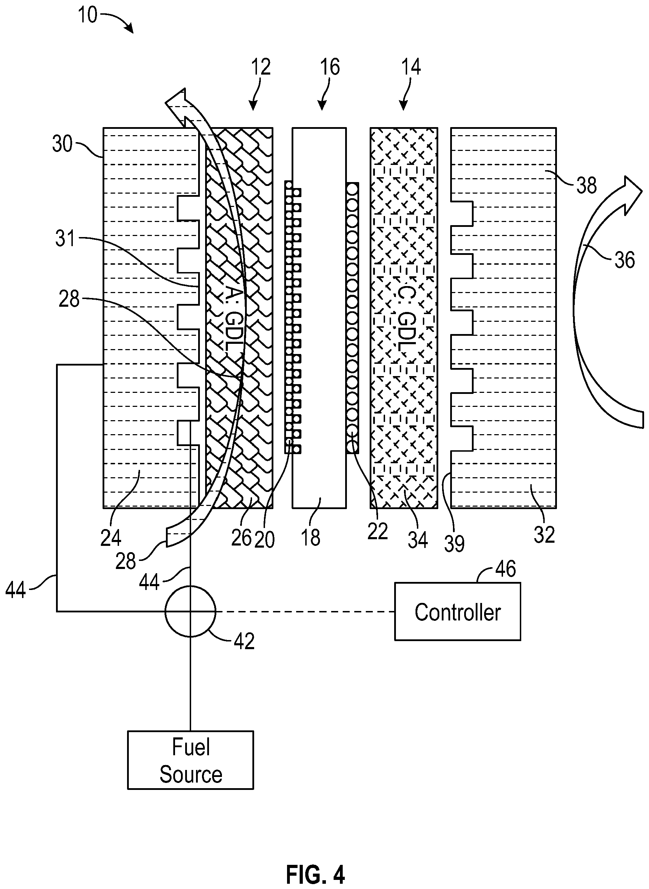

In other embodiments, such as shown in FIG. 4, the flow of fuel 28 has a methanol concentration in a low range of about 15% by weight or less of methanol. In these embodiments, the flow of fuel 28 bypasses the back side 30 of the anode HMP 24 and is directly introduced to channels 33 on the front side 31 of the anode HMP 24 (if present) or to the anode GDL 26 at the anode chamber 35. In this case, methanol in the liquid phase flow of fuel 28 directly diffuses through the anode GDL 26 to the anode electrode 20.

As illustrated, the fuel cell 10 may be provided with one or more valves 42 and fuel input lines 44. Depending on a methanol concentration of the flow of fuel 28, a controller 46 commands opening and/or closing of valves 42 to direct the liquid phase flow of fuel 28 either to the back side 30 of the anode HMP 24 or to the front side 31 of the anode HMP 24. In some embodiments, operation of the fuel cell 10 may be started with a liquid flow of fuel 28 with a relatively high concentration of methanol, for example 100% methanol, and the liquid flow of fuel 28 is introduced to the back side 30 of the anode HMP 24 under a small negative pressure against the gases pressure in the anode GDL 26. As the fuel cell 10 operates, product water produced by the fuel cell 10 may be added to the flow of fuel 28, thus diluting the flow of fuel 28 over time. As the flow of fuel 28 is diluted to be of a low methanol concentration in a range of about 15% by weight or less of methanol, the operation of the valves 42 may be changed to selectably direct the flow of fuel 28 to the front side 31 of the anode HMP 24 at the anode chamber 35. Such an operation can gain excellent fuel utilization and efficiency.

The fuel cell 10 disclosed herein having an anode HMP 24 and a cathode HMP 32 provides improved water management in the fuel cell 10 and a vapor fuel feed without heating of the liquid flow of fuel 28 and without requiring high operating temperature of the fuel cell 10. Further, the fuel cell 10 can efficiently operate with a wide range of methanol solutions, from a very diluted methanol solution up to 100% methanol. Utilizing high to pure concentrations of methanol fuel significantly improves the overall system power and energy density, and reduces fuel storage needed. The fuel cell 10 may further operate at a wide range of fuel cell 10 temperatures, from above 0 degrees Celsius up to the fuel 28 or water boiling point, which depends on the system's operating pressure. Further, since heating of the flow of fuel 28 is not needed, the fuel cell 10 has a simple start-up and shutdown.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

Certain embodiments of the present disclosure are as follows:
1. A direct methanol fuel cell, comprising:
   a cathode electrode;
   an anode electrode;
   a membrane disposed between the anode electrode and the cathode electrode;
   an anode hydrophilic microporous plate (HMP) disposed at an anode side of the fuel cell, the anode HMP having a front side and a back side opposite the front side, the front side disposed closer to the anode electrode than the back side; and
   an anode gas diffusion layer disposed in an anode chamber defined between the anode electrode and the anode HMP;
   wherein a flow of methanol fuel is introduced into the back side of the anode hydrophilic microporous plate or to the anode chamber.
2. The direct methanol fuel cell of embodiment 1, wherein the flow of methanol fuel has a concentration of between 1% and 100% by weight of methanol.
3. The direct methanol fuel cell of embodiment 1, wherein the flow of methanol fuel is introduced into the fuel cell in a liquid phase.
4. The direct methanol fuel cell of embodiment 1, further comprising a blower disposed at the anode side to internally circulate gases in the anode chamber.
5. The direct methanol fuel cell of embodiment 1, further comprising one or more valves configured to selectably direct the liquid flow of methanol fuel to the back side of the anode HMP or to the anode chamber.
6. The direct methanol fuel cell of embodiment 1, wherein the flow of methanol fuel is selectably introduced to a back side of the anode HMP or to the anode chamber based on a concentration of methanol in the flow of methanol fuel.
7. The direct methanol fuel cell of embodiment 1, further comprising:
   a cathode hydrophilic microporous plate (HMP) disposed at a cathode side of the fuel cell, the cathode HMP having a front side and a back side opposite the front side, the front side disposed closer to the cathode electrode than the back side; and
   a cathode gas diffusion layer disposed between the cathode electrode and the cathode HMP;
   wherein a liquid flow of deionized water or a water-based solution is introduced into the back side of the cathode HMP.
8. The direct methanol fuel cell of embodiment 1, wherein the anode electrode, the cathode electrode and the membrane are constructed as a membrane electrode assembly.
9. The direct methanol fuel cell of embodiment 1, wherein the anode gas diffusion layer is one of hydrophilic or hydrophobic.
10. The direct methanol fuel cell of embodiment 7, wherein the cathode gas diffusion layer is one of hydrophilic or hydrophobic, and a hydrophilic gas diffusion layer is preferred.
11. A method of operating a direct methanol fuel cell, comprising:
   providing a fuel cell, including:
   a cathode electrode;
   an anode electrode;
   a membrane disposed between the anode electrode and the cathode electrode;
   an anode hydrophilic microporous plate (HMP) disposed at an anode side of the fuel cell, the anode HMP having a front side and a back side opposite the front side, the front side disposed closer to the anode electrode than the back side; and
   an anode gas diffusion layer disposed in an anode chamber defined between the anode electrode and the anode HMP; and
   selectably introducing a flow of methanol fuel into the back side of the anode HMP or to the anode chamber.
12. The method of embodiment 11, further comprising selectably introducing the flow of methanol fuel to the back side of the anode HMP or to the anode chamber based on a concentration of methanol in the flow of methanol fuel.
13. The method of embodiment 11, wherein the flow of methanol fuel is introduced to the fuel cell at the anode chamber when a concentration of methanol in the flow of methanol fuel is less than or equal to 15% by weight of methanol.
14. The method of embodiment 11, wherein the flow of methanol fuel is introduced to the fuel cell at the back side of the anode HMP when a concentration of methanol in the flow of methanol fuel is greater than 15% and up to 100% by weight of methanol.
15. The method of embodiment 11, wherein the flow of methanol fuel is introduced into the fuel cell in a liquid phase.
16. The method of embodiment 11, wherein the flow of methanol fuel introduced into the back side of anode HMP is maintained under a negative pressure against the gases pressure in the anode chamber.
17. The method of embodiment 16, wherein the operating pressure of the flow of methanol fuel in the back side of anode HMP is about 0.5 lbf/in² to 10 lbf/in² less than the gases pressure in the anode chamber,
18. The method of embodiment 14, further comprising internally circulating the gases in the anode chamber via a blower to enhance evaporation and diffusion of the methanol vapor from the anode HMP to anode electrode.
19. The method of embodiment 11, further comprising selectably directing the flow of methanol fuel to the back side of the anode HMP or to the anode chamber via operation of one or more valves.
20. The method of embodiment 11, further comprising providing:
   a cathode hydrophilic microporous plate (HMP) disposed at a cathode side of the fuel cell, the cathode HMP having a front side and a back side opposite the front side, the front side disposed closer to the cathode electrode than the back side; and
   a cathode gas diffusion layer disposed between the cathode electrode and the cathode hydrophilic microporous plate;
   wherein a liquid flow of deionized water or a water-based solution is circulated at the back side of the cathode HMP under a negative pressure against the gases pressure in the cathode chamber; and wherein an oxidant is introduced into the cathode chamber.

## Claims

1. A direct methanol fuel cell, comprising:
a cathode electrode;
an anode electrode;
a membrane disposed between the anode electrode and the cathode electrode;
an anode hydrophilic microporous plate (HMP) disposed at an anode side of the fuel cell, the anode HMP having a front side and a back side opposite the front side, the front side disposed closer to the anode electrode than the back side; and
an anode gas diffusion layer disposed in an anode chamber defined between the anode electrode and the anode HMP;
wherein a flow of methanol fuel is introduced into the back side of the anode hydrophilic microporous plate or to the anode chamber.

2. The direct methanol fuel cell of claim 1, further comprising a blower disposed at the anode side to internally circulate gases in the anode chamber.

3. The direct methanol fuel cell of claim 1 or claim 2, further comprising one or more valves configured to selectably direct the liquid flow of methanol fuel to the back side of the anode HMP or to the anode chamber.

4. The direct methanol fuel cell of any one of the preceding claims, further comprising:
a cathode hydrophilic microporous plate (HMP) disposed at a cathode side of the fuel cell, the cathode HMP having a front side and a back side opposite the front side, the front side disposed closer to the cathode electrode than the back side; and
a cathode gas diffusion layer disposed between the cathode electrode and the cathode HMP;
wherein a liquid flow of deionized water or a water-based solution is introduced into the back side of the cathode HMP

5. The direct methanol fuel cell of any one of the preceding claims, wherein the anode electrode, the cathode electrode and the membrane are constructed as a membrane electrode assembly.

6. The direct methanol fuel cell of any one of the preceding claims, wherein the anode gas diffusion layer is one of hydrophilic or hydrophobic.

7. The direct methanol fuel cell of any one of claims 4 to 6, wherein the cathode gas diffusion layer is one of hydrophilic or hydrophobic, and a hydrophilic gas diffusion layer is preferred.

8. A method of operating the direct methanol fuel cell of any one of the preceding claims, wherein said method comprises selectably introducing a flow of methanol fuel into the back side of the anode HMP or to the anode chamber.

9. The direct fuel cell or method of any one of the preceding claims, further comprising selectably introducing the flow of methanol fuel to the back side of the anode HMP or to the anode chamber based on a concentration of methanol in the flow of methanol fuel, and/or wherein the flow of methanol fuel has a concentration of between 1% and 100% by weight of methanol.

10. The direct fuel cell or method of any one of the preceding claims, wherein the flow of methanol fuel is introduced into the fuel cell in a liquid phase.

11. The method of any one of claims 8 to 10, wherein the flow of methanol fuel is introduced to the fuel cell at the anode chamber when a concentration of methanol in the flow of methanol fuel is less than or equal to 15% by weight of methanol; or wherein the flow of methanol fuel is introduced to the fuel cell at the back side of the anode HMP when a concentration of methanol in the flow of methanol fuel is greater than 15% and up to 100% by weight of methanol.

12. The method of any one of claims 8 to 11, wherein the flow of methanol fuel introduced into the back side of anode HMP is maintained under a negative pressure against the gases pressure in the anode chamber; and/or wherein the operating pressure of the flow of methanol fuel in the back side of anode HMP is about 0.5 lbf/in² to 10 lbf/in² less than the gases pressure in the anode chamber,

13. The method of any one of claims 8 to 12, further comprising internally circulating the gases in the anode chamber via a blower to enhance evaporation and diffusion of the methanol vapor from the anode HMP to anode electrode.

14. The method of any one of claims 8 to 13, further comprising selectably directing the flow of methanol fuel to the back side of the anode HMP or to the anode chamber via operation of one or more valves.

15. The method of any one of claims 8 to 14, further comprising providing:
a cathode hydrophilic microporous plate (HMP) disposed at a cathode side of the fuel cell, the cathode HMP having a front side and a back side opposite the front side, the front side disposed closer to the cathode electrode than the back side; and
a cathode gas diffusion layer disposed between the cathode electrode and the cathode hydrophilic microporous plate;
wherein a liquid flow of deionized water or a water-based solution is circulated at the back side of the cathode HMP under a negative pressure against the gases pressure in the cathode chamber; and
wherein an oxidant is introduced into the cathode chamber.
